# EUROPEAN PATENT APPLICATION

(11) **EP 3 680 865 A1**
(43) Date of publication of application: **15.07.2020**
(21) Application number: 19195257.1
(22) Date of filing: 04.09.2019
(51) Int. Cl.: G07C 9/00, B62H 5/14, B62M 6/50

(54) **CONTROL SYSTEM FOR INTERCONNECTING ELECTRIC BIKE AND ELECTRONIC LOCK**

(30) Priority: 10.01.2019 TW 108200417 U
(71) Applicant: Yuan Wen Shing Industries Corp., Chang-Hua (TW)
(72) Inventor: HU, Ching-Huang, Taiwan (TW)
(74) Representative: Sun, Yiming

(57) **Abstract**

A control system for interconnecting an electric bike and an electronic lock comprises a bike control device (20), a motor (22), an electronic lock (23), and a wireless operation device (30). The bike control device (20) has a motor control unit (21) connected to the motor (22). The electronic lock (23) includes a bike lock control device (24) and an electric locking device (27). The bike lock control device (24) can receive an operation signal from the wireless operation device (30) to determine whether the wireless operation device (30) is allowed to operate. After the operation is allowed, the electric locking device (27) can be locked, and the bike control device (20) is notified that the motor control unit (21) commands the motor (22) not to output auxiliary power; or the electric locking device (27) can be unlocked, and the bike control device (20) is notified that the motor control unit (21) commands the motor (22) to output auxiliary power. Through the control system, the motor (22) cannot drive the electric bike if the electric locking device (27) is broken.

## Description

### FIELD OF THE INVENTION

The present invention relates to a control system for interconnecting an electric bike and an electronic lock, and in particular, a motor of the electric bike is allowed to output power to the electric bike after an electronic lock is unlocked.

### BACKGROUND OF THE INVENTION

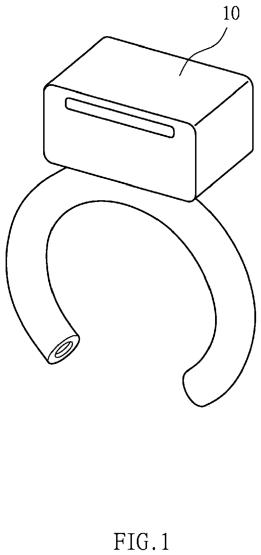

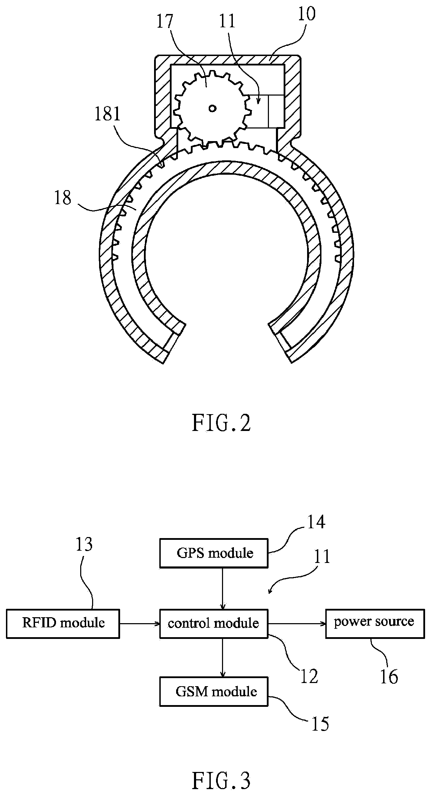

Electric bikes are very convenient and popular in our daily life. In order to prevent theft, the users may use various locks (such as horseshoe locks, chain locks, and so on) as anti-theft locks. FIG. 1, FIG. 2 and FIG. 3 illustrate a keyless smart bike lock having a gear-type rotary lock structure. The smart bike lock comprises a housing 10. The housing 10 is mounted on a bike frame corresponding in position to a bike wheel. A control unit 11 is disposed in the housing 10. The control unit 11 includes a control module 12. An RFID module 13 is connected to the control module 12. The RFID module 13 is configured to perform an inductive control with the user's RFID card. A GPS module 14 is connected to the control module 12. The GPS module 14 performs satellite positioning for the location of the smart bike lock. A GSM module 15 is connected to the control module 12. The GSM module 15 is configured to transmit relevant information to the user's mobile device. The control module 12 is connected with a power source 16. The power source 16 is connected with a rotating gear 17. The power source 16 drives the rotating gear 17 to rotate. The housing 10 is provided with a locking member 18 corresponding to the wheel spoke of the bike. The locking member 18 is formed with a toothed portion 181 corresponding to the rotating gear 17. The toothed portion 181 of the locking member 18 meshes with the rotating gear 17. Thereby, through the rotating gear 17, the power source 16 drives the locking member 18 to move to perform locking or unlocking. However, although the above structure has an anti-theft effect of the electronic lock, if the locking member 18 is broken by a cutter or the like, the power source 16 can still drive the rotating gear 17 to rotate after starting, and the thief can ride the electric bike and leave quickly. Accordingly, the inventor of the present invention has devoted himself based on his many years of practical experiences to solve these problems.

### SUMMARY OF THE INVENTION

The primary object of the present invention is to provide a control system for interconnecting an electric bike and an electronic lock to solve the above problems. A bike control device of an electric bike and a bike lock control device of an electronic lock transmit information to each other. When the electronic lock is locked, a motor does not output power; when the electronic lock is unlocked, the motor can output power. In this way, even if the electronic lock is damaged, the motor does not obtain the permission from the bike lock control device, the motor is in a state of stopping the output of power. The electric bike has no auxiliary power so it can only be used as a general bicycle, thereby reducing electric bike theft.

In order to achieve the above object, a control system for interconnecting an electric bike and an electronic lock is provided. The control system comprises a bike control device, a motor, an electronic lock, a battery, and a wireless operation device. The bike control device is electrically connected to the motor, the electronic lock and the battery. The bike control device has a motor control unit connected to the motor. The motor control unit is configured to activate or deactivate the motor. The electronic lock includes a bike lock control device and an electric locking device. The bike lock control device has a signal receiving unit and a verification unit. The bike lock control device is connected to the bike control device and the electric locking device. The signal receiving unit is configured to receive an operation signal from the wireless operation device for the verification unit to determine whether the wireless operation device is allowed to operate. The wireless operation device that is allowed to operate can lock the electric locking device, and the bike lock control device notifies the motor control unit of the bike control device that the motor cannot output auxiliary power to an electric bike; or the wireless operation device that is allowed to operate can unlock the electric locking device, and the bike lock control device notifies the motor control unit of the bike control device that the motor can output auxiliary power to the electric bike. The battery provides power to the bike control device, the motor and the electronic lock.

In an embodiment of the present invention, the bike control device is further electrically connected to a display device for displaying information that the electronic lock is locked or unlocked, and the battery provides power to the display device.

In an embodiment of the present invention, the display device is a screen.

In an embodiment of the present invention, the signal receiving unit is one of an RFID (Radio Frequency Identification) induction coil, a CAN (Controller Area Network) bus, NFC (Near-field Communication) and Bluetooth. The wireless operation device is an RFID key fob when the signal receiving unit is the RFID induction coil. The wireless operation device is a smart phone with an application when the signal receiving unit is one of the CAN bus, NFC and Bluetooth.

In an embodiment of the present invention, the motor control unit is configured to perform decryption or encryption for controlling the motor to output power or not to output power.

Through the above control system, when the electronic lock is locked, the motor control unit commands the motor not to output power; when the electronic lock is unlocked, the motor control unit commands the motor to output power, so that the motor cannot drive the electric bike if the electric lock is broken.

### BRIEF DESCRIPTION OF THE DRAWINGS

FIG. 1 is a perspective view of a conventional bike lock;
FIG. 2 is a cross-sectional view of the conventional bike lock;
FIG. 3 is a block diagram showing a control unit of the conventional bike lock;
FIG. 4 is a block diagram showing a control system in accordance with the present invention;
FIG. 5 is a flowchart when the present invention is in a locked state; and
FIG. 6 is a flowchart when the present invention is in an unlocked state.

### DETAILED DESCRIPTION OF THE PREFERRED EMBODIMENTS

Embodiments of the present invention will now be described, by way of example only, with reference to the accompanying drawings.

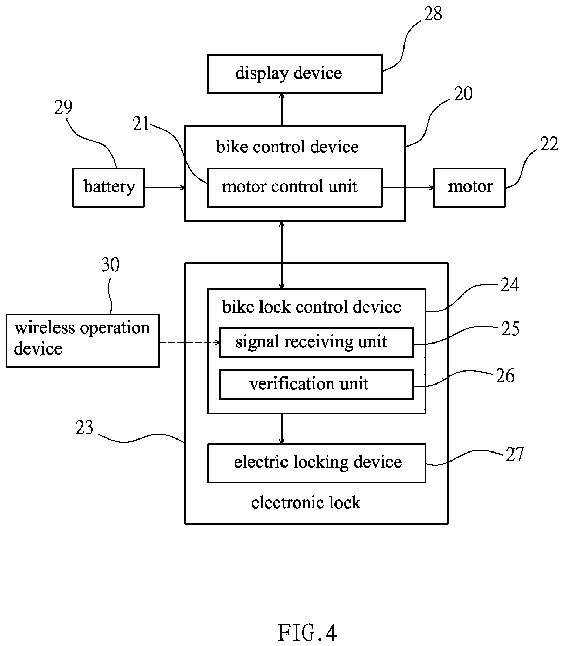

Referring to FIGS. 4-6, the present invention comprises a bike control device 20, a motor 22, an electronic lock 23, a display device 28, a battery 29, and a wireless operation device 30. The bike control device 20 is electrically connected to the motor 22, the electronic lock 23, the display device 28 and the battery 29. The bike control device 20 has a motor control unit 21. The motor control unit 21 is connected to the motor 22. The motor control unit 21 is configured to activate or deactivate the motor 22. The electronic lock 23 includes a bike lock control device 24 and an electric locking device 27. The bike lock control device 24 has a signal receiving unit 25 and a verification unit 26. The bike lock control device 24 is connected to the bike control device 20 and the electric locking device 27. The signal receiving unit 25 is configured to receive an operation signal from the wireless operation device 30 for the verification unit 26 to determine whether the wireless operation device 30 is allowed to operate. The wireless operation device 30 that is allowed to operate can lock the electric locking device 27, and the bike lock control device 24 notifies the motor control unit 21 of the bike control device 20 that the motor 22 cannot output auxiliary power to an electric bike; or the wireless operation device 30 that is allowed to operate can unlock the electric locking device 27, and the bike lock control device 24 notifies the motor control unit 21 of the bike control device 20 that the motor 22 can output auxiliary power to the electric bike. The display device 28 is a screen, which can display the information that the electronic lock 23 is locked or unlocked. The battery 29 provides power to the bike control device 20, the motor 22, the electronic lock 23 and the display device 28. With the above control system, when the electronic lock 23 is locked, the motor 22 cannot output auxiliary power; when the electronic lock 23 is unlocked, the motor 22 can output auxiliary power. If the electric locking device 27 is broken, the motor 22 cannot drive the electric bike.

The assembly and function of the above embodiment are described in detail below. Referring to FIG. 4 to FIG. 6, the signal receiving unit 25 of the present invention may be any one of an RFID (Radio Frequency Identification) induction coil, a CAN (Controller Area Network) bus, NFC (Near-field communication) and Bluetooth. The wireless operation device 30 is an RFID key fob when the signal receiving unit 25 is the RFID induction coil. The wireless operation device 30 is a smart phone with an application when the signal receiving unit 25 is any one of the CAN bus, NFC and Bluetooth. Furthermore, the verification unit 26 is preset with an RFID tag, an NFC tag, a Bluetooth pairing address password or connection serial number data.

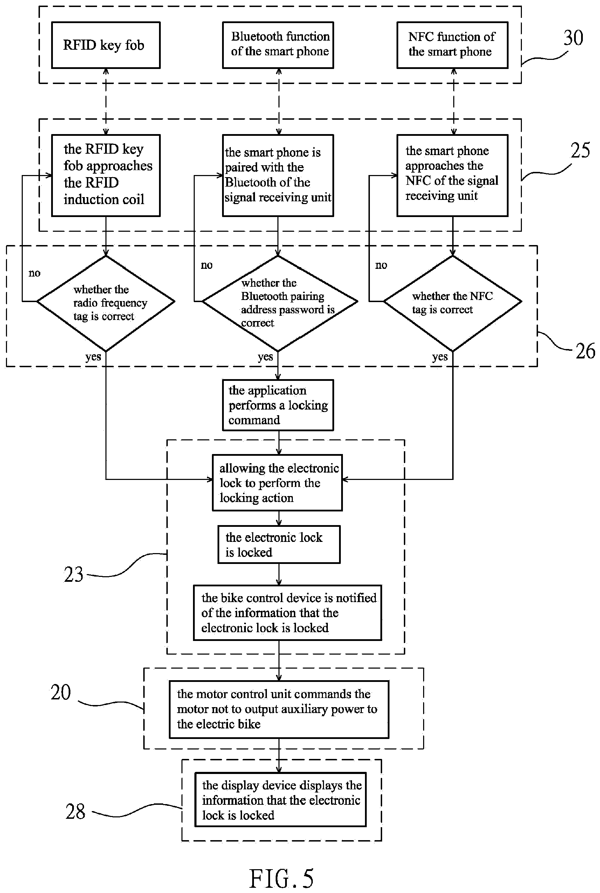

FIG. 5 is a flowchart when the present invention is in a locked state. When the electric bike is to be locked, if the signal receiving unit 25 is provided with an RFID induction coil and the wireless operation device 30 is an RFID key fob, the RFID key fob approaches the RFID induction coil. The RFID induction coil receives the data of the RFID tag of the RFID key fob, and transmits the data to the verification unit 26 for comparison to determine whether the RFID tag is correct. If it is not correct, the subsequent steps of locking cannot be performed. If it is correct, the bike lock control device 24 of the electronic lock 23 allows the electric locking device 27 to perform the locking action. After the electronic lock 23 is locked, the bike control device 20 is notified of the information that the electronic lock 23 is locked. The bike control device 20 notifies the motor control unit 21 that the motor 22 cannot output auxiliary power to the electric bike, and encrypts the locking control function. Moreover, the bike control device 20 also provides the information that the electronic lock 23 is locked to the display device 28 to display the state in which the electronic lock 23 is locked. If the signal receiving unit 25 is provided with NFC or Bluetooth and the wireless operation device 30 is a smart phone with an application for operating the invention, the NFC function of the smart phone approaches the NFC of the signal receiving unit 25. The signal receiving unit 25 will receive the data of the NFC tag, and the data is transmitted to the verification unit 26 for comparison to determine whether the NFC tag is correct. If it is not correct, the next step of locking cannot be implemented. Similarly, the smart phone is installed with an application for operating the present invention, and the Bluetooth function of the smart phone is paired with the Bluetooth of the signal receiving unit 25 (the pairing connection by CAN bus is equivalent technology), and the Bluetooth pairing data is transmitted to the verification unit 26 for comparison to determine whether the Bluetooth pairing address password is correct. If it is not correct, the next step of locking cannot be implemented. If the NFC tag or the Bluetooth pairing address password is correct, the bike lock control device 24 of the electronic lock 23 allows the electric locking device 27 to perform the locking action. After the electronic lock 23 is locked, the bike control device 20 is notified of the information that the electronic lock 23 is locked. The bike control device 20 notifies the motor control unit 21 that the motor 22 cannot output auxiliary power to the electric bike, and encrypts the locking control function. The bike control device 20 also provides the information that the electronic lock 23 is locked to the display device 28 to display the state in which the electronic lock 23 is locked.

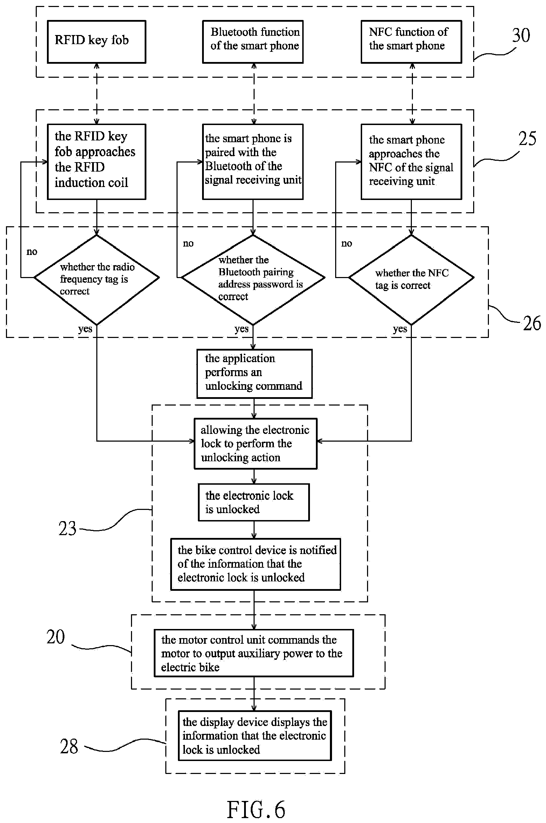

FIG. 6 is a flowchart when the invention is in an unlocked state. When the electric bike is to be unlocked, if the signal receiving unit 25 is provided with an RFID induction coil and the wireless operation device 30 is an RFID key fob, the RFID key fob approaches the RFID induction coil. The RFID induction coil receives the data of the RFID tag of the RFID key fob, and transmits the data to the verification unit 26 for comparison to determine whether the RFID tag is correct. If it is not correct, the subsequent steps of unlocking cannot be performed. If it is correct, the bike lock control device 24 of the electronic lock 23 allows the electric locking device 27 to perform the unlocking action. After the electronic lock 23 is unlocked, the bike control device 20 is notified of the information that the electronic lock 23 is unlocked. The bike control device 20 notifies the motor control unit 21 to perform a decryption unlocking control function, allowing the motor 22 to output auxiliary power to the electric bike. The bike control device 20 also provides the information that the electronic lock 23 is unlocked to the display device 28 to display the state in which the electronic lock 23 is unlocked. If the signal receiving unit 25 is provided with NFC or Bluetooth and the wireless operation device 30 is a smart phone with an application for operating the invention, the NFC function of the smart phone approaches the NFC of the signal receiving unit 25. The signal receiving unit 25 will receive the data of the NFC tag, and the data is transmitted to the verification unit 26 for comparison to determine whether the NFC tag is correct. If it is not correct, the next step of unlocking cannot be implemented. Similarly, the smart phone is installed with an application for operating the present invention, and the Bluetooth function of the smart phone is paired with the Bluetooth of the signal receiving unit 25 (the pairing connection by CAN bus is equivalent technology), and the Bluetooth pairing data is transmitted to the verification unit 26 for comparison to determine whether the Bluetooth pairing address password is correct. If it is not correct, the next step of unlocking cannot be implemented. If the NFC tag or the Bluetooth pairing address password is correct, the bike lock control device 24 of the electronic lock 23 allows the electric locking device 27 to perform the unlocking action. After the electronic lock 23 is unlocked, the bike control device 20 is notified of the information that the electronic lock 23 is unlocked. The bike control device 20 notifies the motor control unit 21 to perform a decryption unlocking control function, allowing the motor 22 to output auxiliary power to the electric bike. The bike control device 20 also provides the information that the electronic lock 23 is unlocked to the display device 28 to display the state in which the electronic lock 23 is unlocked.

When the electronic lock 23 is in the locked state, the motor control unit 21 commands the motor 22 not to output power; when the electronic lock 23 is in the unlocked state, the motor control unit 21 commands the motor 22 to output power, so that the bike control device 20 and the electronic lock 23 are interconnected and controlled, thereby preventing the electric bike from being stolen. It should be noted that when the electronic lock 23 is in the locked state, except that the electric locking device 27 itself has an anti-theft function, even if the connection wire between the bike lock control device 24 of the electronic lock 23 and the bike control device 20 is cut off and the electric locking device 27 is broken and removed, the motor 22 is always in a state of stopping the output of the auxiliary power. It is necessary for the original system vendor to assist in decryption, or the motor control unit 21 does not allow the motor 22 to output power. The electric bike can only be used as a general bike, thereby reducing electric bike theft. The present invention provides a dual protection.

Although particular embodiments of the present invention have been described in detail for purposes of illustration, various modifications and enhancements may be made without departing from the spirit and scope of the present invention. Accordingly, the present invention is not to be limited except as by the appended claims.

## Claims

1. A control system for interconnecting an electric bike and an electronic lock, comprising: a bike control device (20), a motor (22), an electronic lock (23), a battery (29) and a wireless operation device (30), the bike control device (20) being electrically connected to the motor (22), the electronic lock (23) and the battery (29); the bike control device (20) having a motor control unit (21) connected to the motor (22), the motor control unit (21) being configured to activate or deactivate the motor (22); the electronic lock (23) including a bike lock control device (24) and an electric locking device (27), the bike lock control device (24) having a signal receiving unit (25) and a verification unit (26), the bike lock control device (24) being connected to the bike control device (20) and the electric locking device (27), the signal receiving unit (25) being configured to receive an operation signal from the wireless operation device (30) for the verification unit (26) to determine whether the wireless operation device (30) is allowed to operate, wherein the wireless operation device (30) that is allowed to operate can lock the electric locking device (27), and the bike lock control device (24) notifies the motor control unit (21) of the bike control device (20) that the motor (22) cannot output auxiliary power to an electric bike; or the wireless operation device (30) that is allowed to operate can unlock the electric locking device (27), and the bike lock control device (24) notifies the motor control unit (21) of the bike control device (20) that the motor (22) can output auxiliary power to the electric bike; the battery (29) providing power to the bike control device (20), the motor (22) and the electronic lock (23).

2. The control system as claimed in claim 1, wherein the bike control device (20) is further electrically connected to a display device (28) for displaying information that the electronic lock (23) is locked or unlocked, and the battery (29) provides power to the display device (28).

3. The control system as claimed in claim 2, wherein the display device (28) is a screen.

4. The control system as claimed in claim 1, wherein the signal receiving unit (25) is one of an RFID (Radio Frequency Identification) induction coil, a CAN (Controller Area Network) bus, NFC (Near-field Communication) and Bluetooth, the wireless operation device (30) is an RFID key fob when the signal receiving unit (25) is the RFID induction coil, the wireless operation device (30) is a smart phone with an application when the signal receiving unit (25) is one of the CAN bus, NFC and Bluetooth.

5. The control system as claimed in claim 1, wherein the motor control unit (21) is configured to perform decryption or encryption for controlling the motor (22) to output power or not to output power.
